# FASCICULE DE BREVET EUROPEEN

(11) **EP 1 673 559 B1**
(45) Date de publication et mention de la délivrance du brevet: **27.06.2007**
(21) Numéro de dépôt: 04764224.4
(22) Date de dépôt: 18.08.2004
(51) Int. Cl.: F16H 59/70

(54) **PROCEDE DE DETERMINATION DU RAPPORT ENGAGE DANS UNE BOITE DE VITESSES**
VERFAHREN ZUR BESTIMMUNG EINER EINGELEGTEN GANGSTUFE IN EINEM GETRIEBE
METHOD FOR DETERMINING AN ENGAGED RATIO IN A GEARBOX

(30) Priorité: 17.10.2003 FR 0312125
(43) Date de publication de la demande: 28.06.2006
(73) Titulaire: Siemens VDO Automotive, 31036 Toulouse Cedex 1 (FR)
(72) Inventeur: ROUPHAEL, Roger, F-31240 L'Union (FR); HAMM, Benoit, F-31400 Toulouse (FR)
(74) Mandataire: Berg, Peter
(86) Numéro de dépôt international: PCT/EP2004/009236
(87) Numéro de publication internationale: WO 2005/038307

(56) Documents cités:
- DE-A- 3 140 973
- DE-A- 19 908 831
- FR-A- 2 826 087
- US-A- 4 642 771
- US-A- 5 921 135

## Description

La présente invention concerne un procédé de détermination du rapport de boîte engagé dans une boîte de vitesses d'un véhicule automobile et son application à la détermination de la vitesse de ce véhicule automobile en mode dégradé.

Sur les véhicules (voiture, camion, moto etc...) modernes un capteur permettant de déterminer la vitesse du véhicule est prévu. Ce capteur est imposé par la plupart des législations pour permettre au conducteur de connaître et maîtriser la vitesse de son véhicule. Ce capteur sert toutefois également au bon fonctionnement de dispositifs électroniques qui utilisent cette donnée, tels par exemple un régulateur de vitesse.

En cas de défaillance du capteur de vitesse, le conducteur du véhicule ne connaît pas sa vitesse (d'où un risque éventuel d'excès de vitesse) et les dispositifs embarqués utilisant cette donnée deviennent inopérants. De tels dispositifs sont de plus en plus nombreux sur les véhicules modernes. De ce fait l'information donnée par le capteur de vitesse devient de plus en plus importante. Ainsi, à titre d'exemple, le capteur de vitesse permet généralement de déterminer la distance parcourue par le véhicule. Il devient alors impossible en cas de défaillance du capteur de vitesse de prévoir les opérations de maintenance qui sont déterminées en fonction du kilométrage parcouru.

Actuellement, pour pallier une défaillance du capteur de vitesse, il est connu de prévoir la présence d'un second capteur. Ce dernier prend alors le relais du premier lorsque celui-ci est défaillant. Cette solution est satisfaisante sauf que son prix de revient est relativement élevé. Elle ne peut donc qu'être réservée à des véhicules haut de gamme.

Le problème à l'origine de la présente invention est de pouvoir pallier la défaillance d'un capteur de vitesse sans avoir à augmenter sensiblement le prix de revient du véhicule.

Pour résoudre ce problème, l'invention propose de calculer la vitesse à partir du régime moteur et du rapport de boîte de vitesses engagé.

À cet effet, elle propose un procédé de détermination du rapport de boîte engagé dans une boîte de vitesses, caractérisé en ce que le rapport de boîte de vitesses engagé est déterminé lors d'un changement de rapport de boîte de vitesses en divisant l'une par l'autre les valeurs du régime moteur mesurées juste avant et juste après le changement de rapport et en comparant le résultat de cette division avec des valeurs prédéterminées mémorisées qui dépendent de la boîte de vitesses équipant le véhicule.

Une boîte de vitesses présente un arbre d'entrée qui est entraîné par le moteur du véhicule sur lequel elle est montée et un arbre de sortie qui entraîne les roues de ce véhicule. Quand un rapport de boîte de vitesses est engagé, le rapport de la vitesse de rotation de l'arbre de sortie par la vitesse de rotation de l'arbre d'entrée (ou inversement) est une constante. La vitesse de rotation de l'arbre d'entrée correspond au régime du moteur et la vitesse de rotation de l'arbre de sortie donne la vitesse de rotation des roues motrices du véhicule qui est proportionnelle (aux glissements près) à la vitesse de déplacement de ce véhicule. Il suffit donc de multiplier la valeur du régime moteur par une constante qui est fonction du rapport engagé pour obtenir une valeur assez précise de la vitesse de déplacement du véhicule.

Pour déterminer le rapport de boîte de vitesses engagé, on profite d'un changement de rapport et on regarde à ce moment là le régime moteur avant et après le changement. On suppose alors que la vitesse du véhicule est sensiblement constante avant et après ce changement car d'une part ce changement est réalisé dans un laps de temps restreint et d'autre part l'accélération du véhicule est en général modérée. On peut indifféremment diviser le régime d'après le changement de rapport par le régime d'avant le changement ou l'inverse. Compte tenu de l'étagement de la boîte de vitesses on peut alors déterminer le rapport engagé après le changement de rapport.

Lorsque le moteur est accouplé à la boîte de vitesses par l'intermédiaire d'un embrayage ou similaire alors le changement de rapport de boîte de vitesses est détecté par exemple par un capteur placé sur cet embrayage. Ce capteur est avantageusement un contacteur, dont le prix de revient est généralement peu élevé. Pour la détermination du rapport de boîte engagé, la valeur du régime moteur est alors de préférence mémorisée à chaque changement d'état du contacteur.

La présente invention concernant la détermination du rapport de boîte engagé dans une boîte de vitesses peut être appliquée à la détermination de la vitesse d'un véhicule.

Ainsi l'invention propose un procédé de détermination de la vitesse d'un véhicule à l'aide de capteurs embarqués à bord du véhicule, le véhicule étant mû par un moteur accouplé à une boîte de vitesses.

Selon l'invention, la vitesse du véhicule est déterminée en multipliant la valeur du régime moteur obtenue par un capteur par un coefficient prédéterminé en fonction du rapport de boîte de vitesses engagé, et le rapport de boîte de vitesses engagé est déterminé par application d'un procédé tel que décrit plus haut.

Un procédé de détermination de la vitesse d'un véhicule selon l'invention peut être mis en oeuvre uniquement en mode dégradé ou bien en permanence. Le mode dégradé est un mode dans lequel un capteur de vitesses destiné à donner la vitesse du véhicule habituellement ne remplit plus sa fonction.

Quand ce procédé est mis en oeuvre en permanence, la vitesse calculée est de préférence comparée à la valeur de la vitesse mesu rée par un capteur de vitesses. De cette manière on peut connaître à tout moment le rapport de boîte de vitesses engagé et on peut aussi contrôler les capteurs mis en oeuvre pour la détermination de la vitesse afin de détecter une éventuelle défaillance.

Des détails et avantages de la présente invention ressortiront mieux de la description qui suit, faite en référence au dessin schématique annexé sur lequel :

L'unique figure représente schématiquement en vue de dessus un véhicule automobile.

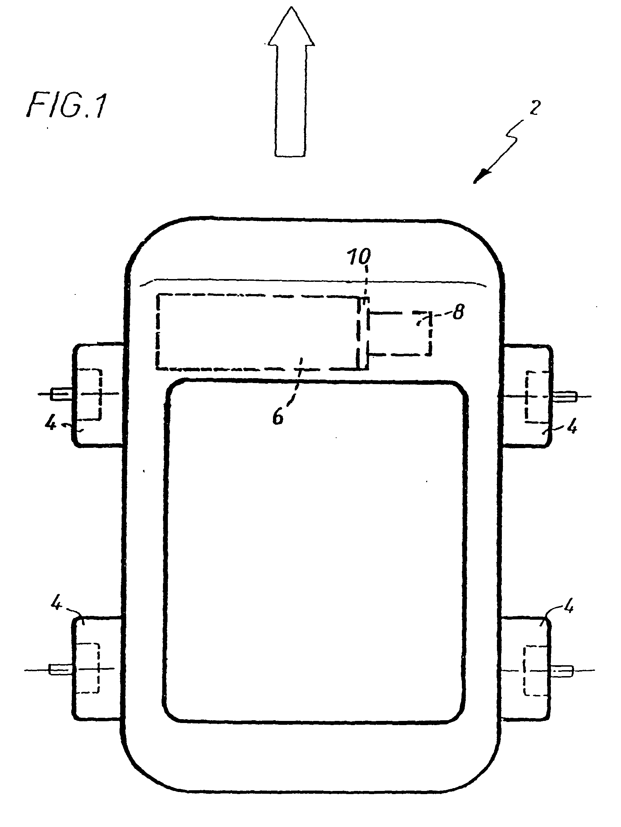

On reconnaît sur la figure 1 un véhicule automobile 2 représenté très schématiquement. Une flèche à l'avant de celui-ci représente son sens normal de déplacement. Ce véhicule comporte quatre roues 4. Les deux roues avant 4 sont motrices et sont entraînées par un moteur 6 par l'intermédiaire d'une boîte de vitesses 8 accouplée au moteur 6 par l'intermédiaire d'un embrayage 10.

Un capteur de vitesse, disposé par exemple au niveau de l'arbre de sortie de la boîte de vitesses 8, permet de déterminer la vitesse du véhicule. Ce capteur de vitesse permet également de déterminer la distance parcourue par le véhicule. Ainsi, ces deux informations sont fournies tout d'abord au conducteur par l'intermédiaire d'un tachymètre et d'un compteur kilométrique placé au niveau du tableau de bord du véhicule 2. Ces informations servent ensuite également à des dispositifs électroniques embarqués à bord du véhicule 2 tels par exemple un régulateur de vitesse, un dispositif gérant les opérations de maintenance à effectuer, etc.... Pour pallier une défaillance éventuelle de ce capteur de vitesse, la présente invention propose de mesurer la vitesse du véhicule à l'aide d'autres capteurs généralement disponibles sur un véhicule automobile.

Dans la forme de réalisation proposée ici, un capteur détermine le régime N du moteur 6. Un autre capteur permet de déterminer si l'embrayage est en position embrayée ou débrayée. Ce capteur est placé par exemple au niveau de l'embrayage 10. Il s'agit de préférence d'un contacteur qui s'enclenche au début d'une action de débrayage et se déclenche en fin d'action d'embrayage.

Un dispositif de gestion et de commande du moteur, qui reçoit les informations de différents capteurs du véhicule, mémorise la valeur du régime moteur N à chaque changement d'état du contacteur, c'est-à-dire lorsque le contacteur s'enclenche ou se déclenche. D'autres stratégies de mémorisation peuvent être envisagées. Ainsi le dispositif de gestion et de commande peut par exemple mémoriser en permanence, ou à intervalles réguliers, le régime moteur N.

Pour réaliser un changement de rapport au niveau de la boîte de vitesses 8, le conducteur agit sur l'embrayage 10. On détermine alors le régime N₁ juste avant le débrayage par mesure de ce régime lorsque le contacteur disposé au niveau de l'embrayage 10 s'enclenche et on mesure après embrayage le régime moteur N₂ lorsque le contacteur se déclenche. On suppose qu'entre les mesures des valeurs N₁ et N₂ la vitesse du véhicule a peu changé. En déterminant alors le rapport N₂/N₁ on détermine quel est le nouveau rapport engagé. En effet, les rapports de démultiplication mécanique de la boîte de vitesses 8 sont tous connus. On sait donc, à vitesse constante, lorsque le régime moteur a une valeur N₀, quelle est la valeur N₀' de ce régime après changement de rapport de la boîte de vitesses 8. On peut donc ainsi facilement à l'inverse déterminer, en fonction du régime moteur N₀' mesuré après changement de rapport et connaissant N₀, le rapport engagé.

Une fois que le rapport engagé et que le régime moteur sont connus, on sait très simplement déterminer la vitesse du véhicule. En effet, pour chaque rapport de la boîte de vitesses 8, il est déterminé par construction du véhicule la vitesse de celui-ci pour un régime moteur donné, par exemple 1000 tours par minute (tr/min). Si sur le dernier rapport de la boîte de vitesses 8 la vitesse du véhicule est ainsi de 40 km/h, la vitesse du véhicule lorsque le régime moteur est de 3.250 tr/min sera alors de 40*3.250/1.000 = 130 km/h.

De préférence, le calcul de la vitesse en fonction du régime moteur et du rapport de la boîte de vitesses engagée est réalisé en permanence. Le rapport de boîte engagé est de cette manière connu à tout moment. Ainsi, lors de la défaillance du capteur de vitesse principale, on connaît le rapport engagé et le calcul en mode dégradé peut immédiatement prendre le relais sur le calcul de la vitesse normale, sans même attendre un changement de rapport de la boîte de vitesses.

Le fait de calculer en permanence la vitesse en fonction du régime et du rapport de boîte engagé peut aussi permettre de détecter la défaillance d'un capteur.

La présente invention ne se limite pas au mode de réalisation décrit ci-dessus à titre d'exemple non limitatif. Elle concerne également toutes les variantes de réalisation à la portée de l'homme du métier dans le cadre des revendications ci-après.

Ce procédé peut bien entendu également fonctionner avec un véhicule muni d'une boîte de vitesses automatique. Dans ce cas l'embrayage est remplacé par un convertisseur qui remplit le même rôle que l'embrayage dans les véhicules muni d'une boîte de vitesses manuelle.

## Revendications

1. Procédé de détermination du rapport de boîte engagé dans une boîte de vitesses, **caractérisé en ce que** le rapport de boîte de vitesses engagé est déterminé lors d'un changement de rapport de boîte de vitesses en divisant l'une par l'autre les valeurs du régime moteur mesurées juste avant et juste après le changement de rapport et en comparant le résultat de cette division avec des valeurs prédéterminées mémorisées qui dépendent de la boîte de vitesses (8) équipant le véhicule.

2. Procédé de détermination du rapport de boîte engagé selon la revendication 1, **caractérisé en ce que** ladite boîte de vitesses (8) est accouplée à un moteur (6) par l'intermédiaire d'un embrayage (10) ou similaire, et **en ce que** le changement de rapport de boîte de vitesses est détecté par un capteur placé sur cet embrayage (10).

3. Procédé de détermination du rapport de boîte engagé selon la revendication 2, **caractérisé en ce que** le capteur placé sur l'embrayage (10) est un contacteur.

4. Procédé de détermination du rapport de boîte engagé selon la revendication 3, **caractérisé en ce que** la valeur du régime moteur est mémorisée à chaque changement d'état du contacteur.

5. Procédé de détermination de la vitesse d'un véhicule à l'aide de capteurs embarqués à bord du véhicule, le véhicule étant mû par un moteur (6) accouplé à une boîte de vitesses (8),
**caractérisé en ce que** la vitesse du véhicule est déterminée en multipliant la valeur du régime moteur (N) obtenue par un capteur par un coefficient prédéterminé en fonction du rapport de boîte de vitesses engagé, et **en ce que** le rapport de boîte de vitesses engagé est déterminé par application d'un procédé selon l'une des revendications 1 à 4.

6. Procédé de détermination de la vitesse d'un véhicule selon la revendication 5, **caractérisé en ce qu'**il est mis en oeuvre uniquement en mode dégradé.

7. Procédé de détermination de la vitesse d'un véhicule selon la revendication 5, **caractérisé en ce qu'**il est mis en oeuvre en permanence.

8. Procédé de détermination de la vitesse d'un véhicule selon la revendication 7, **caractérisé en ce que** la vitesse calculée est comparée à la valeur de la vitesse mesurée par un capteur de vitesses.

## Claims

1. Method for determining the engaged ratio in a gearbox, **characterised in that** the engaged ratio in the gearbox is determined during a gearbox ratio change by dividing the engine speed values measured immediately before and after the ratio change by each other and comparing the result of this division with stored preset values specific to the gearbox (8) fitted in the vehicle.

2. Method for determining the engaged ratio in a gearbox according to claim 1, **characterised in that** said gearbox (8) is coupled to an engine (6) via a clutch (10) or similar, and **in that** changes of gearbox ratio are detected by a sensor fitted to that clutch (10).

3. Method for determining the engaged ratio in a gearbox according to claim 2, **characterised in that** the sensor fitted to the clutch (10) is a contactor.

4. Method for determining the engaged ratio in a gearbox according to claim 3, **characterised in that** the engine speed value is saved each time the state of the contactor changes.

5. Method for determining the speed of a vehicle using sensors fitted to the vehicle, the vehicle being moved by an engine (6) coupled to a gearbox (8),
**characterised in that** the speed of the vehicle is determined by multiplying the value of the engine speed (N) obtained by a sensor by a predetermined coefficient as a function of the engaged ratio of the gearbox, and **in that** the engaged ratio of the gearbox is determined using a method according to any one of claims 1 to 4.

6. Method for determining the speed of a vehicle according to claim 5, **characterised in that** it is only implemented in degraded mode.

7. Method for determining the speed of a vehicle according to claim 5, **characterised in that** it is implemented on a permanent basis.

8. Method for determining the speed of a vehicle according to claim 7, **characterised in that** the speed calculated is compared with the speed measured by a speed sensor.

## Patentansprüche

1. Verfahren zur Bestimmung der eingelegten Getriebegangstufe in einem Getriebe, **dadurch gekennzeichnet, dass** die eingelegte Getriebegangstufe bei einem Wechsel der Getriebegangstufe bestimmt wird, indem die gemessenen Motordrehzahlwerte unmittelbar vor und unmittelbar nach dem Gangstufenwechsel durcheinander dividiert werden und indem das Ergebnis dieser Division mit gespeicherten vorbestimmten Werten verglichen werden, die von dem Getriebe (8) abhängen, mit dem das Fahrzeug ausgerüstet ist.

2. Verfahren zur Bestimmung der eingelegten Getriebegangstufe nach Anspruch 1, **dadurch gekennzeichnet, dass** das Getriebe (8) mittels einer Kupplung (10) oder Ähnlichem an einen Motor (6) gekoppelt ist, und **dadurch**, dass der Wechsel der Getriebegangstufe von einem Sensor erfasst wird, der auf der Kupplung (10) angebracht ist.

3. Verfahren zur Bestimmung der eingelegten Getriebegangstufe nach Anspruch 2, **dadurch gekennzeichnet, dass** der Sensor, der auf der Kupplung (10) angebracht ist, ein Kontaktgeber ist.

4. Verfahren zur Bestimmung der eingelegten Getriebegangstufe nach Anspruch 3, **dadurch gekennzeichnet, dass** der Motordrehzahlwert bei jeder Zustandsänderung des Kontaktgebers gespeichert wird.

5. Verfahren zur Bestimmung der Geschwindigkeit eines Fahrzeugs mit Hilfe von Sensoren an Bord des Fahrzeugs, wobei das Fahrzeug von einem Motor (6) bewegt wird, der an eine Kupplung (8) gekoppelt ist,
**dadurch gekennzeichnet, dass** die Geschwindigkeit des Fahrzeugs bestimmt wird, indem der Motordrehzahlwert (N), der von einem Sensor erhalten wird, mit einem Koeffizienten multipliziert wird, der in Abhängigkeit von der eingelegten Getriebegangstufe vorbestimmt wird, und **dadurch**, dass die eingelegte Getriebegangstufe durch Anwendung eines Verfahrens nach einem der Ansprüche 1 bis 4 bestimmt wird.

6. Verfahren zur Bestimmung der Geschwindigkeit eines Fahrzeugs nach Anspruch 5, **dadurch gekennzeichnet, dass** es nur im Notbetrieb angewendet wird.

7. Verfahren zur Bestimmung der Geschwindigkeit eines Fahrzeugs nach Anspruch 5, **dadurch gekennzeichnet, dass** es ständig angewendet wird.

8. Verfahren zur Bestimmung der Geschwindigkeit eines Fahrzeugs nach Anspruch 7, **dadurch gekennzeichnet, dass** die errechnete Geschwindigkeit mit dem Wert der Geschwindigkeit verglichen wird, die von einem Geschwindigkeitssensor gemessen wird.
